(19)

Europäisches
Patentamt
European
Patent Office
Office européen
des brevets

(11)   **EP 3 462 410 A1**

(12)   # EUROPEAN PATENT APPLICATION

(43) Date of publication:
**03.04.2019  Bulletin 2019/14**

(51) Int Cl.:
**G06T 5/50** (2006.01)       **G06T 5/00** (2006.01)

(21) Application number: **17306295.1**

(22) Date of filing: **29.09.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
- **SABATER, Neus
  35576 CESSON-SÉVIGNÉ (FR)**
- **HOG, Matthieu
  35576 CESSON-SÉVIGNÉ (FR)**
- **BOISSON, Guillaume
  35576 CESSON-SÉVIGNÉ (FR)**

(74) Representative: **Huchet, Anne et al
InterDigital CE Patent Holdings
20, rue Rouget de Lisle
92130 Issy-les-Moulineaux (FR)**

(54)   **A USER INTERFACE FOR MANIPULATING LIGHT-FIELD IMAGES**

(57)   The invention concerns a user interface for manipulating light-field images. Due to the fact that light-field data provide depth information alongside the images themselves, conventional post-processing tools are not adapted to the post-processing of light-field data. Furthermore, the manipulation of light-field images may not be easy and intuitive for non-professional users. The invention enables a user to manipulate light-field images in a user-friendly way. Indeed, in this solution, a user only has to select regions of the light-filed image to be rendered in-focus, and select a a bokeh to be applied to out-of-focus regions of the light-field image as inputs for post-processing tool. Once the light-field image post-processing tool has processed the light-field image, a final post-processed light-field image is rendered which corresponds to the specifications of the user.

FIG.2

EP 3 462 410 A1

**Description**

TECHNICAL FIELD

The present invention lies in the field of light-field, and relates to a technique for manipulating a light-field image. In particular, the present invention concerns a user interface for manipulating a light-field image.

BACKGROUND

Image acquisition devices project a three-dimensional scene onto a two-dimensional sensor. During operation, a conventional capture device captures a two-dimensional (2D) image of the scene representing an amount of light that reaches a photosensor within the device. However, this 2D image contains no information about the directional distribution of the light rays that reach the photosensor, which may be referred to as the light-field. Depth, for example, is lost during the acquisition. Thus, a conventional capture device does not store most of the information about the light distribution from the scene.

Light-field capture devices also referred to as "light-field data acquisition devices" have been designed to measure a four-dimensional (4D) light-field of the scene by capturing the light from different viewpoints of that scene. Thus, by measuring the amount of light traveling along each beam of light that intersects the photosensor, these devices can capture additional optical information, e.g. about the directional distribution of the bundle of light rays, for providing new imaging applications by post-processing. The information acquired by a light-field capture device is referred to as the light-field data. Light-field capture devices are defined herein as any devices that are capable of capturing light-field data. There are several types of light-field capture devices, among which:

- plenoptic devices, which use a microlens array placed between the image sensor and the main lens, as described in document US 2013/0222633;
- camera arrays, as described by Wilburn et al. in "High performance imaging using large camera arrays." ACM Transactions on Graphics (TOG) 24, no. 3 (2005): 765-776 and in patent document US 8514491 B2.

The acquisition of light-field data opens the door to a lot of applications due to its post-capture capabilities such as image refocusing.

One of these applications is known as "synthetic aperture refocusing" (or "synthetic aperture focusing") in the literature. Synthetic aperture refocusing is a technique for simulating the defocus blur of a large aperture lens by using multiple images of a scene. It consists in acquiring initial images of a scene from different viewpoints, for example with a camera array, projecting them onto a desired focal surface, and computing their average. In the resulting image, points that lie on the focal surface are aligned and appear sharp, whereas points off this surface are blurred out due to parallax. From a light-field capture device such as a camera array, it is thus possible to render a collection of images of a scene, each of them being focused at a different focalization distance. Such a collection is sometimes referred to as a "focal stack". Thus, one application of light-field data processing comprises notably, but is not limited to, generating refocused images of a scene.

However, due to the fact that light-field data provide depth information alongside the images themselves, conventional post-processing tools, such as Photoshop® or Gimp, are not adapted to the post-processing of light-field data.

Furthermore, light-field data are complex data the manipulation of which may not be easy and intuitive for non-professional users.

It would hence be desirable to provide a technique for manipulating a light-field image that would avoid at least one of these drawbacks of the prior art.

SUMMARY OF INVENTION

According to a first aspect of the invention there is provided a computer implemented method for manipulating at least a first light-field image , the method comprising:

- Detecting a first input identifying at least one region of the first image to be manipulated, called sharp region, in which pixels are to be rendered in-focus,
- Detecting a second input selecting a shape of a bokeh to be applied to pixels of the first image to be manipulated that are to be rendered out-of-focus,
- Rendering a final image obtained by applying the selected shape of a bokeh to the identified out-of-focus pixels of the first image to be manipulated.

The method according to an embodiment of the invention enables a user to manipulate light-field images acquired by a camera array, or by a plenoptic camera, in a user-friendly way. Indeed, in this solution, a user only has to select regions of the light-filed image to be rendered sharp or in-focus, and select a shape of a bokeh to be applied to out-of-focus regions of the light-field image as inputs for a light-field image post-processing tool. Once the light-field image post-processing tool has processed the light-field image, a final post-processed light-field image is rendered which corresponds to the specifications of the user: the rendered image is sharp in regions selected by the user and the bokeh corresponds to the parameters selected by the user.

Selecting a shape of a bokeh to apply to the out-of-focus enables to render a more realistic and/or aesthetic final image.

Such a solution makes it easy to manipulate images as complex as light-field images.

The method according to an embodiment of the invention is not limited to light-field images directly acquired by an optical device. These data may be Computer Graphics Image (CGI) that are totally or partially simulated by a computer for a given scene description. Another source of light-field images may be post-produced data that are modified, for instance color graded, light-field images obtained from an optical device or CGI. It is also now common in the movie industry to have data that are a mix of both images acquired using an optical acquisition device, and CGI data.

The pixels of the first image to be manipulated that are to be rendered are the pixels belonging to the first image to be manipulated that do not belong to the identified sharp region of the first image to be manipulated. Identifying the sharp regions of the first image to be manipulated is more user friendly than selecting regions to be rendered out-of-focus since a user tends to know which object of an image he wants to be in focus.

An advantage of the method according to the invention is that it enables a user to select the shape of a bokeh to be applied for a given region, a given color, a given depth, or for a given pixel of the image to be manipulated, etc.

For example, the manipulation applied to the image to be manipulated may be a synthetic aperture refocusing.

According to an embodiment of the invention, said first input comprises a lower bound and an upper bound of a depth range so that pixels of the first image to be manipulated having a depth value within the depth range are to be rendered in-focus, said depth range being smaller than or equal to a depth range of the first image to be manipulated.

Said lower bound and upper bound of the depth range may be provided as two numerical values.

The first input may also consist in moving at least one slider displayed on a graphical user interface between the lower bound and the upper bound of the depth range.

The first input may also consist in selecting two points of the image to be manipulated, for example, using a pointing device, the depth of these two points defining the lower bound and the upper bound of the depth range.

According to an embodiment of the invention, said first input comprises coordinates of the pixels defining boundaries of said sharp region within said first image to be manipulated.

In this case, the sharp region is identified by drawing the boundaries of the sharp region on a graphical user interface by means of a pointing device for example.

The sharp region may also be identified by sweeping a pointing device over a portion of a graphical user interface.

Finally, the sharp region may be identified by applying a mask defining the boundaries of the sharp region on the image to be manipulated.

According to an embodiment of the invention, said first input comprises at least a sharpness filter filtering out pixels to be rendered out-of-focus.

Such filters may for example force faces, salient parts of the image to be manipulated or certain pixels of the image to be manipulated, e.g. pixel which color is a given shade of red, to be rendered sharp.

According to an embodiment of the invention, the method further comprises:

- Detecting a third input selecting a weight of the bokeh to be applied to pixels of the first image to be manipulated that are to be rendered out-of-focus.

Selecting a weight of the bokeh to be applied to the image to be manipulated contributes to improve the aesthetic/realism of the final image.

According to an embodiment of the invention, the method further comprises:

- Detecting a fourth input providing a numerical value equal to or greater than an absolute value of a difference between a depth $D(x)$ of the first image to be manipulated and a depth $d(x)$ at which at least pixel of the final image is to be rendered.

By setting an upper limit to the absolute value of a difference between a depth $D(x)$ of the first image to be manipulated and a depth $d(x)$ at which at least pixel of the final image is to be rendered, one can modify the weight of the bokeh for the pixels to be rendered out-of-focus.

Another object of the invention concerns a device for manipulating at least a first image acquired by a camera array comprising:

- A display for displaying at least said first image to be manipulated,
- A user interface,
  said device further comprising at least a hardware processor configured to:
- Detect a first input on the user interface identifying at least one region of the first image to be manipulated, called sharp region, in which pixels are to be rendered in-focus,
- Detect a second input on the user interface selecting a shape of a bokeh to be applied to pixels of the first image to be manipulated that are to be rendered out-of-focus,
- Render, on the display; a final image obtained by applying the selected shape of a bokeh to the identified out-of-focus pixels of the first image to be manipulated.

Such a device maybe for example a smartphone, a tablet, etc. in an embodiment of the invention, the device embeds a graphical user interface such as a touch screen instead of a display and user interface.

According to an embodiment of the device, said first input comprises a lower bound and an upper bound of a depth range so that pixels of the first image to be manipulated having a depth value within the depth range are to be rendered in-focus, said depth range being smaller than or equal to a depth range of the first image to be manipulated.

According to an embodiment of the device, said first input comprises boundaries of said sharp region within said first image to be manipulated.

According to an embodiment of the device, said first input comprises at least a sharpness filter filtering out pixels to be rendered out-of-focus.

According to an embodiment of the device, the hardware processors is further configured to:

- Detect a third input selecting a weight of the bokeh to be applied to pixels of the first image to be manipulated that are to be rendered out-of-focus.

According to an embodiment of the device, the hardware processors is further configured to:

- Detect a fourth input providing a numerical value equal to or greater than an absolute value of a difference between a depth $D(x)$ of the first image to be manipulated and a depth $d(x)$ at which at least pixel of the final image is to be rendered.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and referring to the following drawings in which:

**Figure 1** represents a user interface according an embodiment of the invention,
**Figure 2** represents the user interface when a method for manipulating an image according to an embodiment of the invention is executed,
**Figure 3** is a flowchart representing the steps of a method for manipulating a light-field image according to the invention explained in the point of view of a user,
**Figure 4** is a flowchart representing the steps of a method for manipulating a light-field image when executed by a device embedding a user interface according to an embodiment of the invention,
**Figure 5** is A graphical representation of function $d(x)$ in one dimension,

**Figure 6** is a schematic block diagram illustrating an example of a device capable of executing the methods according to an embodiment of the invention.

DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

The invention concerns a user interface for manipulating light-field data or content. By light-field content it is meant light-field images directly acquired by an optical device or Computer Graphics Image (CGI) light-field data that are totally or partially simulated by a computer for a given scene description. Another source of light-field data may be post-produced data that are modified, for instance color graded, light-field images obtained from an optical device or CGI. It is also now common in the movie industry to have data that are a mix of both images acquired using an optical acquisition device, and CGI data.

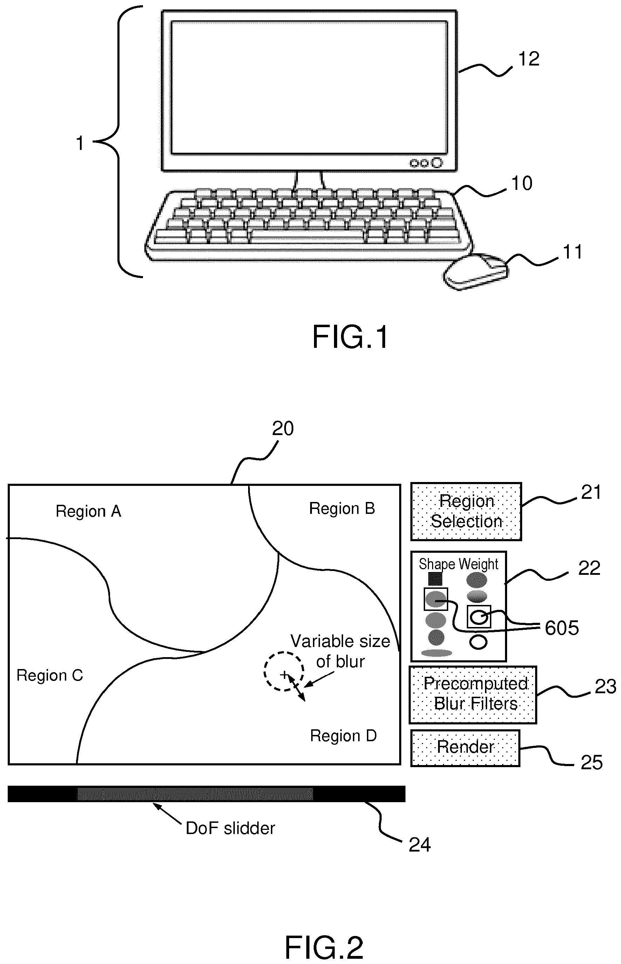

**Figure 1** represents a user interface according an embodiment of the invention. Such a user interface 1 comprises, in a first embodiment of the invention, a keyboard 10 and/or a pointing device 11, such as mouse and is connected to a display 12. In a second embodiment of the invention, the user interface 1 may be a touchscreen.

**Figure 2** represents the user interface 1 of figure 1 when a method for manipulating an image according to an embodiment of the invention is executed.

A light-field image 20 is displayed on the display 12 of the user interface 1. A plurality of buttons 21-25 are displayed as well on the display 12 of the user interface 1. Buttons 21-25 are activated by a user by means of the keyboard 10 or the pointing device 11, or by touching a finger on an area of the touchscreen where a button 21-25 is displayed.

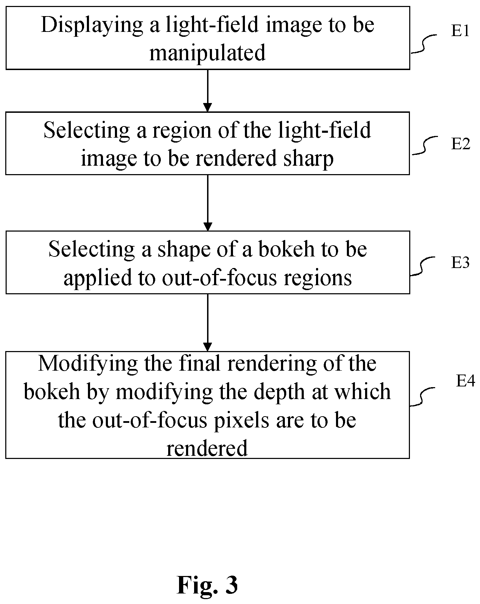

**Figure 3** is a flowchart representing the steps of a method for manipulating a light-field image according to the invention explained in the point of view of a user.

In a step E1, a light-field image to be manipulated is displayed on the display 12.

In a step E2, the user selects at least one region A, B, C or D on figure 2, of the displayed image, or image to be manipulated, to be rendered sharp by activating the button 21 displayed on the display 12 for example using the pointing device 11. Once the button 21 has been activated, the user may select a first region of the image to be manipulated which is to be rendered sharp by either:

- providing a lower bound and an upper bound of a depth range so that pixels of the image to be manipulated having a depth value within the depth range are to be rendered in-focus, said depth range being smaller than or equal to a depth range of the image to be manipulated; in this case, the user may type numerical values corresponding the lower bound and the upper bound on the keyboard 10
- drawing boundaries of said sharp region within said image to be manipulated using the pointing device 11 or his finger. In this case, the coordinates of the pixels defining the boundaries of the sharp region are provided,
- selecting at least a sharpness filter filtering out pixels of the image to be manipulated to be rendered out-of-focus,
- or by sliding the bar 24 between a lower bound and an upper bound.

In an embodiment of the invention, the sharp regions are predetermined by mean of a segmentation algorithm. For example, the algorithm in "Light-Field Segmentation using a Ray-Based Graph Structure" Hog, Sabater, Guillemot, ECCV'16 he UI may propose the different regions to the user by means of a color code. The user then selects a region for example by pointing the pointing device on the region of his choosing.

In another embodiment, the user may select faces or salient regions or objects of interest, by activating a button.

In another embodiment of the invention, a sharp region is suggested to the user by a learning strategy (deep learning [LeCun Bengio, Hinton, Nature 2015]. The learning strategy has learnt which is the part of the image that should be sharp or blur.

In a step E3, the user activates the button 22 for selecting the shape and the weight of a bokeh to be applied to regions of the image to be manipulated which are not to be rendered sharp in order to modify the aesthetic of the image to be rendered. It is to be noted that the shape and weight of the bokeh can be different for each selected regions of the image to be manipulated.

In another embodiment of the invention, instead of activating the button 22, the user may activate the button 23 which results in applying pre-computed blur filters.

In another embodiment of the invention, in order to modify the size of a bokeh to be applied to regions of the image to be manipulated which are to be rendered out-of-focus, the user may touch an area of the image to be manipulated corresponding to the region to be rendered out-of-focus in a pinching gesture. By varying a diameter of a circle by means of this pinching gesture, the user may modify the size of the bokeh.

In an optional step E4, once the user has selected the shape, the weight and the size of the bokeh to be applied to out-of-focus regions of the image to be manipulated, he may modify the final rendering of the bokeh to be applied by modifying the depth at which the out-of-focus pixels of the image to be manipulated are to be rendered. This may be done by sliding the bar 24 between a lower bound and an upper bound.

Such a user interface is user-friendly as it enables a user to easily manipulate a content as complex as a light-field image intuitively and easily.

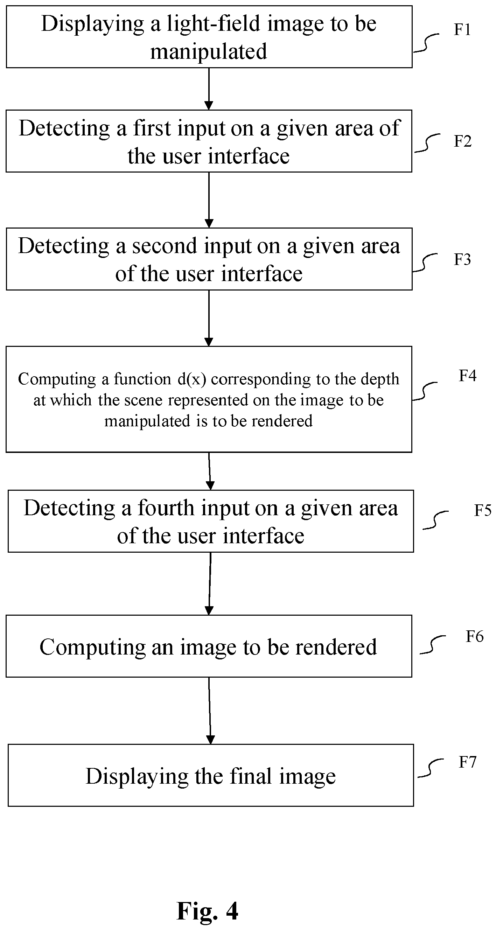

**Figure 4** is a flowchart representing the steps of a method for manipulating a light-field image when executed by a device embedding a user interface according to an embodiment of the invention.

In a step F1, a light-field image to be manipulated is displayed on the display 12 of the user interface 1.

In a step F2, a first input on a given area of the user interface 1 is detected. The detection of the first input triggers the identification of at least one region A, B, C or D of the image to be manipulated to be rendered sharp. The identifying of the regions of the image to be manipulated which is to be rendered sharp by is done either by:

- providing a lower bound and an upper bound of a depth range so that pixels of the image to be manipulated having a depth value within the depth range are to be rendered in-focus, said depth range being smaller than or equal to a depth range of the image to be manipulated,
- drawing boundaries of said sharp region within said image to be manipulated,
- selecting at least a sharpness filter filtering out pixels of the image to be manipulated to be rendered out-of-focus.

In a step F3, a second input on an area of the user interface 1, distinct form the area on which the first input was detected, is detected. The detection of the second input triggers the selection of the shape and the weight of a bokeh to be applied to regions of the image to be manipulated which are not to be rendered sharp in order to modify the aesthetic of the image to be rendered. It is to be noted that the shape and weight of the bokeh can be different for each selected regions of the image to be manipulated. In an embodiment of the invention, the selection of the weight to be applied is triggered by the detection of a third input on the graphical user interface 1.

In a step F4, a function d(x) corresponding to the depth at which the scene represented on the image to be manipulated is to be rendered (with its corresponding blur), is computed as follows:

$$
d(x) = \begin{cases} D(x), & x \in \Omega_{sharp} \\ D_M, & x \in \Omega \setminus \Omega_{sharp}, D(x) > D_M \\ D_m, & x \in \Omega \setminus \Omega_{sharp}, D(x) < D_m \end{cases}
$$

Where $D_m$ and $D_M$ are the minimum and maximum values of $D$ the depth range of the scene, $\Omega_{sharp}$ is the region of pixels to be rendered sharp, and $D(x)$ is the actual depth of the scene.

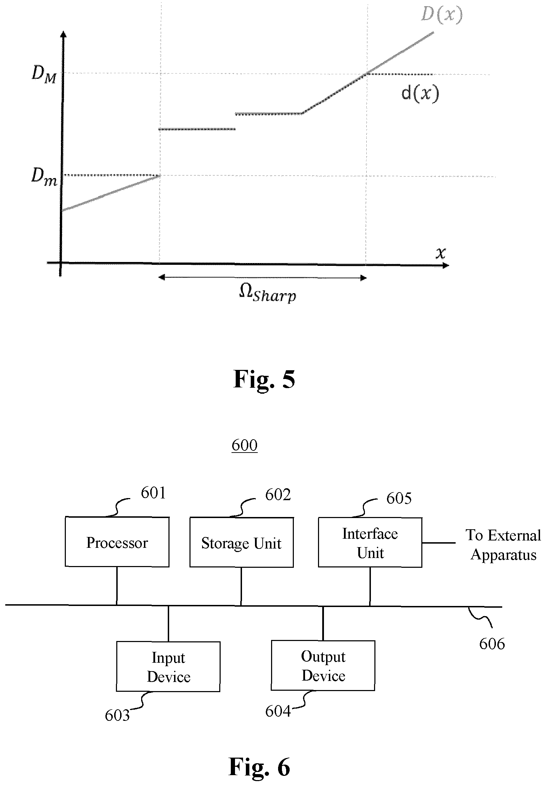

The graphical representation of function $d(x)$ is represented on **figure 5.** Figure 5 is illustrated in one dimension for the sake of illustration. The continuous line represents the real depth and the point-line is the depth used for the new rendering.

In an optional step F5, a fourth input is detected on an area of the user interface. The detection of this fourth input triggers the reception of a numerical value equal to or greater than an absolute value of a difference between the depth $D(x)$ of the scene and the depth $d(x)$ at which at least pixel of the final image is to be rendered.

Such a step enables to modifying the final rendering of the bokeh to be applied by modifying the depth at which the out-of-focus pixels of the image to be manipulated are to be rendered.

In a step F6, based on all the parameters provided through the user interface, an image to be rendered is computed. Eventually, the rendering can be done in an interactive way. In this way, every time the user makes a change the changes are directly visible on the resulting image.

In a step F7, a final image is then displayed on the display 12.

**Figure 6** is a schematic block diagram illustrating an example of a device capable of executing the methods according to an embodiment of the invention.

The apparatus 600 comprises a processor 601, a storage unit 602, an input device 603, a display device 604, and an interface unit 605 which are connected by a bus 606. Of course, constituent elements of the computer apparatus 600 may be connected by a connection other than a bus connection.

The processor 601 controls operations of the apparatus 600. The storage unit 602 stores at least one program to be executed by the processor 601, and various data, including data of 4D light-field images captured and provided by a light-field camera, parameters used by computations performed by the processor 601, intermediate data of computations performed by the processor 601, and so on. The processor 601 may be formed by any known and suitable hardware, or software, or a combination of hardware and software. For example, the processor 601 may be formed by dedicated hardware such as a processing circuit, or by a programmable processing unit such as a CPU (Central Processing Unit) that executes a program stored in a memory thereof.

The storage unit 602 may be formed by any suitable storage or means capable of storing the program, data, or the like in a computer-readable manner. Examples of the storage unit 602 include non-transitory computer-readable storage media such as semiconductor memory devices, and magnetic, optical, or magneto-optical recording media loaded into a read and write unit. The program causes the processor 601 to perform a process for manipulating a light-field image according to an embodiment of the present disclosure as described with reference to figures 3-4.

The input device 603 may be formed by a keyboard 10, a pointing device 11 such as a mouse, or the like for use by the user to input commands, to make user's selections of regions to be rendered sharp, of the shape and weight of a bokeh to apply to out-of-focus regions, etc. The output device 604 may be formed by a display device 12 to display, for example, a Graphical User Interface (GUI), images generated according to an embodiment of the present disclosure. The input device 603 and the output device 604 may be formed integrally by a touchscreen panel, for example.

The interface unit 605 provides an interface between the apparatus 600 and an external apparatus. The interface unit 605 may be communicable with the external apparatus via cable or wireless communication. In an embodiment, the external apparatus may be a light-field camera. In this case, data of 4D light-field images captured by the light-field camera can be input from the light-field camera to the apparatus 600 through the interface unit 605, then stored in the storage unit 602.

In this embodiment the apparatus 600 is exemplary discussed as it is separated from the light-field camera and they are communicable each other via cable or wireless communication, however it should be noted that the apparatus 600 can be integrated with such a light-field camera. In this later case, the apparatus 600 may be for example a portable device such as a tablet or a smartphone embedding a light-field camera.

Although the present invention has been described hereinabove regarding specific embodiments, the present invention is not limited to the specific embodiments, and modifications will be apparent to a skilled person in the art which lie within the scope of the present invention.

Many further modifications and variations will suggest themselves to those versed in the art upon referring to the foregoing illustrative embodiments, which are given by way of example only and which are not intended to limit the scope of the invention, that being determined solely by the appended claims. In particular, the different features from different embodiments may be interchanged, where appropriate.

## Claims

1. A computer implemented method for manipulating at least a first light-field image , the method comprising:

   - Detecting a first input identifying at least one region of the first light-field image to be manipulated, called sharp region, in which pixels are to be rendered in-focus,
   - Detecting a second input selecting a shape of a bokeh to be applied to pixels of the first light-field image to be manipulated that are to be rendered out-of-focus,
   - Rendering a final image obtained by applying the selected shape of a bokeh to the identified out-of-focus pixels of the first light-field image to be manipulated.

2. The method according to claim 1 wherein said first input comprises a lower bound and an upper bound of a depth range so that pixels of the first light-field image to be manipulated having a depth value within the depth range are to be rendered in-focus, said depth range being smaller than or equal to a depth range of the first light-field image to be manipulated.

3. The method according to claim 1 wherein said first input comprises coordinates of pixels defining boundaries of said sharp region within said first image to be manipulated.

4. The method according to claim 1 wherein said first input comprises at least a sharpness filter filtering out pixels to be rendered out-of-focus.

5. The method according to claim 1 further comprising:

   - Detecting a third input selecting a weight of the bokeh to be applied to pixels of the first light-field image to be manipulated that are to be rendered out-of-focus.

6. The method according to claim 1 further comprising:

   - Detecting a fourth input selecting a size of the bokeh to be applied to pixels of the first light-field image to be manipulated that are to be rendered out-of-focus.

7. The method according to any of the preceding claims further comprising:

   - Detecting a fifth input providing a numerical value equal to or greater than an absolute value of a difference between a depth $D(x)$ of the first light-field image to be manipulated and a depth $d(x)$ at which at least pixel of the final image is to be rendered.

8. A device for manipulating at least a first light-field image comprising:

   - A display for displaying at least said first light-field image to be manipulated,
   - A user interface,
   said device further comprising at least a hardware processor configured to:
   - Detect a first input on the user interface identifying at least one region of the first light-field image to be manipulated, called sharp region, in which pixels are to be rendered in-focus,
   - Detect a second input on the user interface selecting a shape of a bokeh to be applied to pixels of the first light-field image to be manipulated that are to be rendered out-of-focus,
   - Render, on the display; a final image obtained by applying the selected shape of a bokeh to the identified out-of-focus pixels of the first light-field image to be manipulated.

9. The device according to claim 8, wherein said first input comprises a lower bound and an upper bound of a depth range so that pixels of the first light-field image to be manipulated having a depth value within the depth range are to be rendered in-focus, said depth range being smaller than or equal to a depth range of the first light-field image to be manipulated.

10. The device according to claim 8 wherein said first input comprises boundaries of said sharp region within said first light-field image to be manipulated.

11. The device according to claim 8 wherein said first input comprises at least a sharpness filter filtering out pixels to be rendered out-of-focus.

12. The device according to claim 8, wherein the hardware processors is further configured to:

   - Detect a third input selecting a weight of the bokeh to be applied to pixels of the first light-field image to be manipulated that are to be rendered out-of-focus.

13. The device according to any of claims 8-12, wherein the hardware processors is further configured to:

   - Detect a fourth input providing a numerical value equal to or greater than an absolute value of a difference between a depth $D(x)$ of the first light-field image to be manipulated and a depth $d(x)$ at which at least pixel of the final image is to be rendered.

14. A computer program **characterized in that** it comprises program code instructions for the implementation of the method according to claim 1 when the program is executed by a processor.

15. A processor readable medium having stored therein instructions for causing a processor to perform the method according to claim 1.

FIG.1

FIG.2

**Fig. 3**

| Displaying a light-field image to be manipulated | F1 |

↓

| Detecting a first input on a given area of the user interface | F2 |

↓

| Detecting a second input on a given area of the user interface | F3 |

↓

| Computing a function d(x) corresponding to the depth at which the scene represented on the image to be manipulated is to be rendered | F4 |

↓

| Detecting a fourth input on a given area of the user interface | F5 |

↓

| Computing an image to be rendered | F6 |

↓

| Displaying the final image | F7 |

**Fig. 4**

**Fig. 5**

600

**Fig. 6**

Europäisches
Patentamt

European
Patent Office

Office européen
des brevets

**EUROPEAN SEARCH REPORT**

Application Number

EP 17 30 6295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/091906 A1 (LIANG CHIA-KAI [US] ET AL) 30 March 2017 (2017-03-30) <br> * paragraph [0089] - paragraph [0166] * <br> ----- | 1-15 | INV. <br> G06T5/50 <br> G06T5/00 |

TECHNICAL FIELDS
SEARCHED      (IPC)

G06T

The present search report has been drawn up for all claims

| Place of search | Date of completion of the search | Examiner |
|---|---|---|
| Munich | 6 March 2018 | Rockinger, Oliver |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

    ...................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 17 30 6295

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2018

| Patent document cited in search report | Publication date | Patent family member(s) | Publication date |
|---|---|---|---|
| US 2017091906 A1 | 30-03-2017 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130222633 A

- US 8514491 B2

**Non-patent literature cited in the description**

- **WILBURN et al.** High performance imaging using large camera arrays. *ACM Transactions on Graphics (TOG),* 2005, vol. 24 (3), 765-776

- **LECUN BENGIO ; HINTON.** *Nature,* 2015